**Europäisches Patentamt**

**European Patent Office**

**Office européen des brevets**

(19)

(11) Veröffentlichungsnummer : **0 017 784**
**B1**

(12) **EUROPÄISCHE PATENTSCHRIFT**

(45) Veröffentlichungstag der Patentschrift :
17.03.82

(51) Int. Cl.³ : **C 09 C   1/02, C 01 B 25/32**

(21) Anmeldenummer : **80101469.7**

(22) Anmeldetag : **20.03.80**

(54) Verfahren zur Herstellung eines Korrosionsschutzpigments auf Phosphatbasis.

(30) Priorität : **20.04.79 DE 2916029**

(43) Veröffentlichungstag der Anmeldung :
**29.10.80 (Patentblatt 80/22)**

(45) Bekanntmachung des Hinweises auf die Patenterteilung : **17.03.82 Patentblatt 82/11**

(84) Benannte Vertragsstaaten :
**AT BE CH DE FR GB IT NL SE**

(56) Entgegenhaltungen :
**DE - C - 977 735**

(73) Patentinhaber : **HOECHST AKTIENGESELLSCHAFT**
**Postfach 80 03 20**
**D-6230 Frankfurt/Main 80 (DE)**

(72) Erfinder : **Maurer, Alexander, Dr.**
**Am Grünen Weg 7**
**D-5030 Hürth (DE)**
Erfinder : **Adrian, Renate**
**Grosse Ölbruchstrasse 29**
**D-5030 Hürth (DE)**
Erfinder : **Hestermann, Klaus Dr.**
**Am Wachberg 68**
**D-5042 Erftstadt (DE)**
Erfinder : **Heymer, Gero, Dr.**
**Fasanenaue 12**
**D-5042 Erftstadt (DE)**

Imprimerie Jouve, 18, rue St-Denis, 75001 Paris, France

# 0 017 784

## Verfahren zur Herstellung eines Korrosionsschutzpigments auf Phosphatbasis

Die nicht vorveröffentlichte EP-A-0 009 175 beschreibt ein Verfahren zur Herstellung phosphorhaltiger Korrosionsschutzpigmente mit einer Korngröße von höchstens 20 μm durch Umsetzung von Verbindungen der Metalle Mg, Ca, Sr, Ba, Zn, Al, Fe, Cr, Mn mit Sauerstoffsäuren des Phosphors oder deren Alkali- oder Ammoniumsalzen bei Temperaturen von 10 °C-100 °C, welches dadurch gekennzeichnet ist, daß man zur Erzielung einer Korngrößenverteilung der Pigmente von mindestens 90 % zwischen 0,05 und 8 μm die Reaktionskomponenten in wäßriger Suspension oder Lösung in einem mit 3 000 bis 10 000 Upm rotierenden Dispergierorgan durch inniges Vermischen zur Reaktion bringt und das ausgefallene Pigment in bekannter Weise abtrennt und trocknet. Gemäß den dortigen Beispielen 5 und 6 werden Magnesiumhydrogenphosphattrihydrat ($MgHPO_4 \cdot 3H_2O$) und Calciumhydrogenphosphatdihydrat ($CaHPO_4 \cdot 2H_2O$) jeweils in Pigmentfeinheit einzeln hergestellt.

Weiterhin beschreibt die nicht vorveröffentlichte EP-A-0 011 223 ein korrosionsinhibierendes Pigment auf Phosphatbasis für den Oberflächenschutz von Eisen und Eisenlegierungen, das aus einer Mischung von 3 bis 97 Gew% $MgHPO_4 \cdot 3H_2O$, Rest $CaHPO_4 \cdot 2H_2O$ besteht. Derartige Mischungen können durch Zusammenmischen der Einzelkomponenten hergestellt werden. Aus der Tabelle dieser Anmeldung geht hervor, daß Mischungen von $CaHPO_4 \cdot 2H_2O$ und $MgHPO_4 \cdot 3H_2O$, bevorzugt solche mit 70-90 Gew. % $CaHPO_4 \cdot 2H_2O$ im Gemisch, wesentlich höhere Korrosionsschutz-Kennziffern als die Einzelkomponenten oder $Zn_3(PO_4)_2 \cdot 2H_2O$ aufweisen.

Es zeigte sich allerdings, daß beim Zusammenmischen, ja sogar bei der gemeinsamen Vermahlung handelsüblicher Calcium- und Magnesiumhydrogenphosphate wieder teilweise Entmischungen auftreten.

Das Verfahren der Erfindung vermeidet diesen Nachteil. Es betrifft die Herstellung phosphorhaltiger Korrosionsschutz-pigmente mit einer Korngröße von höchstens 20 μm durch Umsetzung von Verbindungen des Calciums oder Magnesiums mit Phosphorsäure oder sauren Alkali- oder Ammoniumphosphaten in wäßriger Suspension oder Lösung durch inniges Vermischen in einem mit 3 000 bis 10 000 Upm rotierenden Dispergierorgan, Abtrennen und Trocknen des ausgefallenen Pigments, und ist dadurch gekennzeichnet, daß man zur Herstellung eines homogenen Gemisches und/oder Mischkristallisats aus 10-95 Mol% Calciumhydrogenphosphatdihydrat, Rest Magnesiumhydrogenphosphattrihydrat, mit einem Korngrößenanteil von mindestens 55 Gew% im Bereich von 0 bis 5 μm und einer BET-Oberfläche von mindestens 1 m²/g, vorzugsweise 2-5 m²/g, feinpulverisierte Verbindungen des Calciums und Magnesiums gemeinsam mit Wasser und ggf. einem wasserlöslichen Alkanol zu einer homogenen Aufschlämmung bzw. Lösung verrührt, diese im Dispergierorgan bei 0-40 °C in angenähert stöchiometrischem Molverhältnis mit der Phosphorsäure oder einer Lösung der sauren Phosphate innig vermischt, das ausgefallene Pigment abtrennt und unter Erhaltung des Kristallwassergehalts schonend trocknet.

Das Verfahren der Erfindung kann weiterhin wahlweise und bevorzugt dadurch gekennzeichnet, sein, daß man

a) als Verbindungen des Calciums und Magnesiums Oxide, Hydroxide, Carbonate, basische Carbonate oder Carboxylate, vorzugsweise Acetate, einsetzt ;

b) die Verbindungen des Calciums und Magnesiums gemeinsam mit Wasser und ggf. einem wasserlöslichen Alkanol unter Zuhilfenahme eines mit 60 bis 800 Upm rotierenden Rührers verrührt ;

c) bei einer kontinuierlichen Arbeitsweise die homogene Aufschlämmung bzw. Lösung der Calcium-/Magnesium-Verbindungen einerseits und die Phosphorsäure oder die Lösung der sauren Phosphate andererseits gleichzeitig in das Dispergierorgan eindosiert ;

d) bei einer diskontinuierlichen Arbeitsweise die homogene Aufschlämmung bzw. Lösung der Calcium/Magnesium-Verbindungen im Kreislauf durch das Dispergierorgan leitet, dem man die Phosphorsäure oder die Lösung der sauren Phosphate zudosiert ;

e) eine 5 bis 50 gewichtsprozentige homogene Aufschlämmung der Calcium/Magnesium-Verbindungen mit 10 bis 85 gewichtsprozentiger, vorzugsweise 50 bis 85 gewichtsprozentiger, Phosphorsäure im Dispergierorgan umsetzt ;

f) die Phosphorsäure oder die Lösung der sauren Phosphate in das Dispergierorgan eindüst ;

g) die Phosphorsäure in Form einer wäßrigen oder wäßrigalkoholischen Lösung einsetzt ; und

h) als Dispergierorgan eine Gewindepumpe oder einen Dispergator nach dem Rotor-Stator-Prinzip verwendet.

Soweit im erfindungsgemäß hergestellten Pigment auch Mischkristallisate enthalten sind, können diese durch die Summenformel $(Ca, Mg)HPO_4 \cdot 2 - 3H_2O$ bezeichnet werden. Die erfindungsgemäß hergestellten Pigmente lassen sich infolge ihrer besonderen Kornfeinheit und ausgezeichneten Dispergierbarkeit vorzüglich in Dispersionen einarbeiten.

Die feinpulverisierten Verbindungen des Calciums und Magnesiums können gemeinsam statt mit Wasser auch mit einer Alkanol/Wasser-Mischung homogen aufgeschlämmt bzw. gelöst werden, wobei als Alkanol Methanol, Äthanol, n-Propanol und Isopropanol brauchbar sind. Auch die Phosphorsäure kann ggf. unter Zusatz eines solchen Alkanols und von Wasser als verdünnte Lösung verwendet werden. Will man als Calcium- und Magnesiumverbindungen Carbonate einsetzen, so kommen hierfür auch feingemahlener Calcit, Magnesit und Dolomit infrage. Verwendet man statt Phosphorsäure saure Phosphate, so

2

empfehlen sich hierfür wäßrige oder wäßrigalkanolische Lösungen der Hydrogenphosphate oder Dihydrogenphosphate des Natriums, Kaliums oder des Ammoniums. In der Reaktionszone müssen stark dispergierende Bedingungen herrschen, weshalb man die Umsetzung in einem Dispergerorgan selbst vornimmt. Die Calcium/Magnesium-Verbindungen einerseits und Phosphorsäure bzw. Phosphate andererseits werden bevorzugt in stöchiometrischem Molverhältnis eingesetzt. Leichte Abweichungen davon erlauben die Herstellung leicht basischer bzw. leich saurer Reaktionsprodukte, die in besonderen Fällen von Nutzen sein können. Bei Verwendung wasserlöslicher Alkanole als Suspendierungs- oder Lösemittel muß trotzdem genügend Wasser im Reaktionsgemisch vorliegen, um nicht zu wasserfreien Pigmenten zu gelangen. Aus diesem Grund sollte die Reaktionstemperatur 40 °C nicht übersteigen, da sonst wasserfreie Produkte entstehen, die nachträglich nicht mehr in der Lage sind, genügend Kristall-Wasser aufzunehmen. Im allgemeinen wird daher bei Raumtemperatur gearbeitet. Die Phosphorsäure oder die Lösung der sauren Phosphate kann der Reaktionszone, d.h. dem Dispergierorgan, über ein Rohr zugeführt werden. Besonders vorteilhaft ist aber die Zudosierung über eine Düse, wodurch besonders feine Pigmente mit ausgezeichneter Dispergierbarkeit erhalten werden.

Ein weiterer Vorteil des erfindungsgemäßen Verfahrens liegt darin, daß man die Reaktionspartner in vergleichsweise hoher Konzentration miteinander zur Reaktion bringen kann, wobei man trotzdem ein gleichbleibend feinteiliges Produkt mit ausgezeichneter Dispergierbarkeit erhält. Hierdurch werden die Aufarbeitungszeit kurz und die Apparatedimensionen so klein wie möglich gehalten. Ein großer Vorteil der Erfindung ist auch darin zu sehen, daß die Pigmente bereits bei der Reaktion in einer Feinheit unter 20 μm, überwiegend sogar unter 5 μm, anfallen. Hierdurch spart man eine aufwendige und energieintensive Mahlung und bewahrt die durch das Fällungsverfahren erhaltene ausgezeichnete Homogenität der Pigmente, was für die verschiedenen Anwendungen sehr günstig ist.

Nach der Umsetzung im Dispergierorgan wird die Pigment-aufschlämmung auf herkömmliche Art und Weise abfiltriert oder abzentrifugiert. Der Filterkuchen wird ggf. gewaschen. Anschließend wird das Pigment in handelsüblichen Trockenaggregaten vorsichtig getrocknet, wobei durch die Wahl von Temperatur und Verweilzeit der Gefahr einer Bildung wasserfreier Korrosionsschutzpigmente begegnet wird.

## Beispiel 1

In einem 30 l-Gefäß mit Rührer werden unter gutem Rühren (500 Upm) 1 801,4 g $CaCO_3$ und 80,6 g MgO in 20 l Wasser zu einer gleichmäßig konzentrierten Aufschlämmung vermischt. Über eine Pumpe wird die Aufschlämmung in eine trichterförmige Reaktionszone mit einem axial angeordneten nach dem Rotor-Stator-Prinzip arbeitenden Dispergator dosiert. Als Dispergator wird das Hochleistungs-Dispergiergerät Ultra-Turrax® (eingetragenes Warenzeichen der Firma IKA-Werk, Janke und Kunkel KG, Staufen i.Br.) verwendet. Der Dispergator hat eine Umdrehungszahl von 10 000 Upm. Im Verlauf von 1 h werden in die Reaktionszone 2 305,2 g 85 gew%ige Phosphorsäure gleichmäßig zugegeben. Die Mischung wird noch 30 min umgepumpt und dann über eine Nutsche abfiltriert. Das gewonnene Calcium-Magnesium-Hydrogenphosphatpigment wird mit Wasser und Aceton gewaschen und im Trockenschrank 3 Stunden bei 60 °C getrocknet. Das Pigment hat eine maximale Korngröße von 12 μm, wobei 60 Gew% unter 5 μm liegen ; seine spezifische Oberfläche nach BET beträgt 2,7 m²/g. Die Analyse lautet : Ca = 21,0 Gew% ; Mg = 1,3 Gew%, P = 18,0 Gew% bzw. 90,7 Mol% Calciumhydrogenphosphatdihydrat und 9,3 Mol% Magnesiumhydrogenphosphattrihydrat.

## Beispiel 2

Es wird wie in Beispiel 1 gearbeitet, jedoch wird die Phosphorsäure über eine Düse in die Reaktionszone dosiert. Man erhält so ein Pigment mit einer maximalen Korngröße von 10 μm und 75 Gew% unter 5 μm. Die BET-Oberfläche beträgt 2,8 m²/g. Die analytischen Werte sind : Ca = 21,0 Gew%, Mg = 1,4 Gew%, P = 17,9 Gew% bzw. 90,1 Mol% $CaHPO_4 \cdot 2H_2O$ und 9,9 Mol% $MgHPO_4 \cdot 3H_2O$.

## Beispiel 3

Man arbeitet gemäß Beispiel 2, setzt aber 1 000,8 g $CaCO_3$ und 403,2 g MgO ein. Auf diese Weise entsteht ein Pigment mit einer maximalen Korngröße von 15 μm und 65 Gew% unterhalb 5 μm. Seine BET-Oberfläche beträgt 2,5 m²/g. Die Analyse lautet : Ca = 11,8 Gew% ; Mg = 7,0 Gew% ; P = 17,8 Gew% bzw. 50,6 Mol% $CaHPO_4 \cdot 2H_2O$ und 49,4 Mol% $MgHPO_4 \cdot 3H_2O$.

## Beispiel 4

Man arbeitet gemäß Beispiel 2, setzt aber 400,3 g $CaCO_3$ und 645,0 g MgO ein. So erhält man ein Pigment mit einer maximalen Korngröße von 15 μm und 60 Gew% kleiner als 5 μm. Die BET-Oberfläche beträgt 2,1 m²/g. Analyse des Pigments : Ca = 5,0 Gew% ; Mg = 11,2 Gew% ; P = 17,9 Gew% bzw. 21,3 Mol% $CaHPO_4 \cdot 2H_2O$ und 78,7 Mol% $MgHPO_4 \cdot 3H_2O$.

### Beispiel 5

In einem 1 m³-Gefäß mit Rührer werden unter gutem Rühren (100 Upm) 100 kg $CaCO_3$ und 10 kg MgO in 500 l Wasser zu einer homogenen Aufschlämmung vermischt, die frei in eine Gewindepumpe fließt, die einerseits das Reaktionsgemisch umpumpt und andererseits als Reaktionszone dient. Diese Gewindepumpe dreht sich mit 3 000 Upm. Unmittelbar vor Eintritt in die Gewindepumpe werden der Aufschlämmung im Verlauf von 3 Stunden 145 kg 85 gew%ige Phosphorsäure über eine Düse zudosiert. Nach Zugabe der gesamten Phosphorsäure wird das Reaktionsgemisch noch 30 min im Kreis gepumpt und dann über eine Zentrifuge filtriert. Das gewonnene Calcium-Magnesium-Hydrogenphosphatpigment wird in der Zentrifuge mit Wasser gewaschen und in einem Wirbelschichttrockner 10-15 s bei 70 °C getrocknet. Das Pigment hat eine maximale Korngröße von 8 μm eine Verteilung von 80 Gew% unterhalb 5 μm. Seine BET-Oberfläche beträgt 2,8 m²/g. Seine Analyse lautet : Ca = 18,8 Gew% ; Mg = 2,7 Gew% ; P = 18,0 Gew% bzw. 80,9 Mol% $CaHPO_4·2H_2O$ und 19,1 Mol% $MgHPO_4·3H_2O$.

### Beispiel 6

Man arbeitet gemäß Beispiel 2. Zum Einsatz kommen jedoch 1 000 g eines feingemahlenen Dolomits mit einem CaO-Gehalt von 54,3 % und einem MgO-Gehalt von 36,9 %, aufgeschlämmt in 10 l Wasser. Diese Aufschlämmung wird mit 2 170,3 g 85 gew%iger Phosphorsäure umgesetzt. Es resultiert ein Pigment, dessen Analyse lautet : Ca = 12,0 Gew% ; Mg = 6,7 Gew% ; P = 17,9 Gew% bzw. 52,1 Mol% $CaHPO_4·2H_2O$ und 47,9 Mol% $MgHPO_4·3H_2O$. Seine maximale Korngröße liegt bei 12 μm, wobei 65 Gew% unterhalb 5 μm liegen. Seine BET-Oberfläche beträgt 2,4 m²/g.

### Beispiel 7

Man arbeitet gemäß Beispiel 2. Es werden jedoch zur Aufschlämmung von 1 601 g $CaCO_3$ und 161 g MgO in 20 l Wasser 3 918 g einer Lösung aus 2 304 g 85 Gew%iger Phosphorsäure, Rest Äthanol ( = 50 gew%ige wäßrig-äthanolische $H_3PO_4$-Lösung) zugegeben. Man erhält auf diese Weise ein Pigment mit einem Ca-Gehalt von 18,8 Gew%, einem Mg-Gehalt von 2,7 Gew% und einem P-Gehalt von 17,8 Gew% bzw. 80,9 Mol% $CaHPO_4·2H_2O$ und 19,1 Mol% $MgHPO_4·3H_2O$. Seine Korngröße liegt unter 12 μm, wobei 70 Gew% unter 5 μm liegen. Die BET-Oberfläche beträgt 2,4 m²/g.

### Beispiel 8

Man arbeitet gemäß Beispiel 2. Es wird jedoch eine Aufschlämmung aus 1 601 g $CaCO_3$ und 161 g MgO in 20 l 50 gew%igem Äthanol bereitet, der 3 918 g einer Lösung aus 2 304 g 85 gew%iger Phosphorsäure, 634,5 g Wasser und 979,5 g Äthanol ( = 50 gew%ige wäßrig-äthanolische $H_3PO_4$-Lösung) zugegeben werden. Man erhält ein Pigment mit folgender Analyse : Ca = 18,9 Gew% ; Mg = 2,7 Gew% ; P = 17,9 Gew% bzw. 80,9 Mol% $CaHPO_4·2H_2O$ und 19,1 Mol% $MgHPO_4·3H_2O$. Seine Korngröße liegt unter 10 μm, wobei 70 Gew% unterhalb 5 μm liegen. Die BET-Oberfläche des Pigments beträgt 2,5 m²/g.

### Beispiel 9

Man arbeitet gemäß Beispiel 1. Es werden jedoch zu einer homogenen Aufschlämmung von 1 585,7 g $Ca(CH_3COO)_2·H_2O$ und 214,5 g $Mg(CH_3COO)_2·4H_2O$ in 3 l Wasser im Verlauf von 1 Stunde 2 680,7 g $Na_2HPO_4·7H_2O$ in 8 l Wasser zugegeben. Das ausgefallene und abfiltrierte Pigment wird mehrmals mit Wasser und zum Schluß mit Aceton gewaschen ; anschließend wird es 2 Stunden im Trockenschrank bei 70 °C getrocknet. Die Analyse dieses Pigments lautet : Ca = 20,9 Gew% ; Mg = 1,3 Gew% ; P = 17,9 Gew% bzw. 90,7 Mol% $CaHPO_4·2H_2O$ und 9,3 Mol% $MgHPO_4·3H_2O$. Die Korngröße liegt bei höchstens 12 μm ; 65 % liegen unterhalb von 5 μm. Die spezifische Oberfläche dieses Pigments nach BET beträgt 2,7 m²/g.

### Beispiel 10

Prüfung der Dispergierbarkeit und des Korrosionsschutzes

1. Prüfrezeptur

| | |
|---|---|
| Alkydharz (Alftalat® AF 342 ; eingetragenes Warenzeichen der Firma Hoechst Aktiengesellschaft, Frankfurt/M) | 38,0 Gew.-Teile |
| Äthylglykol | 4,0 Gew.-Teile |
| Testbenzin | 4,0 Gew.-Teile |

| | |
|---|---|
| n-Butanol | 0,5 Gew.-Teile |
| Hautverhinderungsmittel (Additol® XL 297, eingetragenes Warenzeichen der Firma Hoechst Aktiengesellschaft, Frankfurt/M) | 0,5 Gew.-Teile |
| Dimethyl-dioctadecyl-ammoniummont-morillonit | 1,0 Gew.-Teile |
| (Bentone® 34, 10 gew%ig ; eingetragenes Warenzeichen der Firma NL Industries Inc., New York, USA) | |
| Talkum | 10,0 Gew.-Teile |
| Bariumsulfat | 11,0 Gew.-Teile |
| Titandioxid | 13,0 Gew.-Teile |
| Korrosionsschutzpigment | 18,0 Gew.-Teile |
| | 100,0 Gew.-Teile |

Auf der Basis dieser Rezeptur wurde durch Variation des Korrosionsschutzpigments ein Korrosionsschutzmittel mit einer PVK = 32 eingestellt. Unter Pigmentvolumenkonzentration (PVK) wird dabei das Verhältnis des Pigment- und Füllstoffvolumens zum Gesamtvolumen aller nichtflüchtigen Lackbestandteile verstanden.

### 2. Beschreibung der Dispergierbarkeitsprüfung

Die verschiedenen Komponenten der Prüfrezeptur werden in ein 1 l-Gefäß gegeben, bei niederer Drehzahl (unterhalb 1 000 Upm) des Dissolvers gemischt und anschließend 15 min dispergiert. Dabei wird eine Rührgeschwindigkeit von 8 400 Upm eingestellt. Der Durchmesser des Gefäßes beträgt 100 mm, jener der Rührscheibe 50 mm. Nach dem Dispergieren wird der Lack über eine schrägstehende Glasplatte oder Kunststoffolie gegossen und nach dem Abtropfen bei 60 °C getrocknet.

Die Benotung erfolgt in Anlehnung an DIN 53 209, wobei die Stippenbildung bewertet wird. Die Anzahl der Stippen wird zunehmend von m 0 bis m 5, die Größe von g 0 bis g 5 charakterisiert. m 1/g 1 bedeutet demnach ein sehr gutes Ergebnis, während m 5/g 5 völlig ungenügend wäre.

### 3. Beschreibung der Korrosionsschutzprüfung

Die erfindungsgemäßen Pigmente und die Vergleichspigmente wurden in Kurzzeittests geprüft nach dem Salzsprühtest (ASTM B 117-64), dem Schwitzwassertest (DIN 500 17) und dem Kesternichtest (DIN 500 18). Zur Testauswertung werden die Prüfbleche nach ihrem Rostgrad (Europäische Skala des Verrostungsgrades von Korrosionsschutzanstrichen — zu beziehen von « Fédération Nationale des Industries des Peintures, Vernis, Encres d'Imprimerie et Couleurs Fines, 42, Av. Marceau - 75008 Paris »), ihrem Blasengrad (DIN 532 09) und der Unterrostung am Kreuzschnitt bewertet. Den genormten Rostgrad- und Blasengradgrößen sowie der nach eigener Übereinkunft in Millimetern ausgemessenen Unterrostung werden jeweils Bewertungsziffern (BZ) von 0 bis 100 derart zugeordnet, daß mit steigendem Rostgrad bzw. Blasengrad bzw. Unterrostungsgrad die Bewertungsziffern von 100 auf 0 abfallen. In jedem der 3 Tests kann eine maximale Bewertungsziffer von 300 dann erreicht werden, wenn ein 100 %iger Korrosionsschutz vorliegt.

Um eine quantitative Aussage über das Korrosionsschutzpigment zu erhalten, werden die drei Bewertungsziffern zu einer einzigen Kennziffer (KZ) zusammengefaßt. Der Salzsprühtest gibt die Schutzwirkung bei atmosphärischen Langzeiteinflüssen am besten wieder. Deshalb wird der Salzsprühtest bei der Errechnung der Kennziffer mit dem doppelten Gewicht gewertet. Die Kennziffer wird errechnet nach der Formel :

$$KZ = \frac{2 \cdot BZ(Salzsp.) + BZ(Schwitzw.) + BZ(Kesternich.)}{1\,200} \cdot 100$$

Bei 100 %igem Korrosionsschutz errechnet sich eine maximal mögliche Kennziffer von 100.

Die Ergebnisse der Prüfung der Dispergierbarkeit sowie der Korrosionsschutzes sind in der nachfolgenden Tabelle zusammengefaßt.

TABELLE

| Pigment | Dispergierbarkeit (Prüfnote) | Kennziffer für Korrosionsschutz |
|---|---|---|
| $CaHPO_4 \cdot 2\ H_2O$ | m 1/g 2 | 62 |
| $MgHPO_4 \cdot 3\ H_2O$ | m 2/g 1 | 57 |
| Pigment Beispiel 1 | m 1/g 2 | 82 |
| Pigment Beispiel 2 | m 1/g 1 | 83 |
| Pigment Beispiel 3 | m 1/g 1 | 78 |
| Pigment Beispiel 4 | m 1/g 2 | 75 |
| Pigment Beispiel 5 | m 1/g 1 | 86 |
| Pigment Beispiel 6 | m 2/g 1 | 75 |
| Pigment Beispiel 7 | m 1/g 2 | 82 |
| Pigment Beispiel 8 | m 1/g 2 | 84 |
| Pigment Beispiel 9 | m 2/g 1 | 81 |

## Ansprüche

1. Verfahren zur Herstellung phosphorhaltiger Korrosionsschutzpigmente mit einer Korngröße von höchstens 20 µm durch Umsetzung von Verbindungen des Calciums oder Magnesiums mit Phosphorsäure oder sauren Alkali- oder Ammoniumphosphaten in wäßriger Suspension oder Lösung durch inniges Vermischen in einem mit 3 000 bis 10 000 Upm rotierenden Dispergierorgan, Abtrennen und Trocknen des ausgefallenen Pigments, dadurch gekennzeichnet, daß man zur Herstellung eines homogenen Gemisches und/oder Mischkristallisats aus 10-95 Mol% Calciumhydrogenphosphatdihydrat, Rest Magnesiumhydrogenphosphattrihydrat, mit einem Korngrößenanteil von mindestens 55 Gew% im Bereich von 0 bis 5 µm und einer BET-Oberfläche von mindestens 1 $m^2/g$, vorzugsweise 2-5 $m^2/g$, feinpulverisierte Verbindungen des Calciums und Magnesiums gemeinsam mit Wasser und ggf. einem wasserlöslichen Alkanol zu einer homogenen Aufschlämmung bzw. Lösung verrührt, diese im Dispergierorgan bei 0 bis 40 °C in angenähert stöchiometrischen Molverhältnis mit der Phosphorsäure oder einer Lösung der sauren Phosphate innig vermischt, das ausgefallene Pigment abtrennt und unter Erhaltung des Kristallwassergehaltes schonend trocknet.

2. Verfahren nach Anspruch 1, dadurch gekennzeichnet, daß man als Verbindungen des Calciums und Magnesiums Oxide, Hydroxide, Carbonate, basische Carbonate oder Carboxylate, vorzugsweise Acetate, einsetzt.

3. Verfahren nach Anspruch 1 oder 2, dadurch gekennzeichnet, daß man die Verbindungen des Calciums und Magnesiums gemeinsam mit Wasser und ggf. einem wasserlöslichen Alkanol unter Zuhilfenahme eines mit 60 bis 800 Upm rotierenden Rührers verrührt.

4. Verfahren nach einem der vorhergehenden Ansprüche, dadurch gekennzeichnet, daß man bei einer kontinuierlichen Arbeitsweise die homogene Aufschlämmung bzw. Lösung der Calcium/Magnesium-Verbindungen einerseits und die Phosphorsäure oder die Lösung der sauren Phosphate andererseits gleichzeitig in das Dispergierorgan eindosiert.

5. Verfahren nach einem der Ansprüche 1 bis 3, dadurch gekennzeichnet, daß man bei einer diskontinuierlichen Arbeitsweise die homogene Aufschlämmung bzw. Lösung der Calcium/Magnesium-Verbindungen im Kreislauf durch das Dispergierorgan leitet, dem man die Phosphorsäure oder die Lösung der sauren Phosphate zudosiert.

6. Verfahren nach einem der vorhergehenden Ansprüche, dadurch gekennzeichnet, daß man eine 5 bis 50 gewichtsprozentige homogene Aufschlämmung der Calcium/Magnesium-Verbindungen mit 10 bis 85 gewichtsprozentiger, vorzugsweise 50 bis 85 gewichtsprozentiger, Phosphorsäure im Dispergierorgan umsetzt.

7. Verfahren nach einem der vorhergehenden Ansprüche, dadurch gekennzeichnet, daß man die Phosphorsäure oder die Lösung der sauren Phosphate in das Dispergierorgan eindüst.

8. Verfahren nach einem der vorhergehenden Ansprüche, dadurch gekennzeichnet, daß man die Phosphorsäure in Form einer wäßrigen oder wäßrig-alkoholischen Lösung einsetzt.

9. Verfahren nach einem der vorhergehenden Ansprüche, dadurch gekennzeichnet, daß man als Dispergierorgan eine Gewindepumpe oder einen Dispergator nach dem Rotor-Stator-Prinzip verwendet.

## Claims

1. Process for making phosphorus-containing anticorrosion pigments with a particle size of at most 20 microns by reacting calcium or magnesium compounds with phosphoric acid or acid alkali metal or ammonium phosphates in aqueous suspension or solution by intimate mixing in a dispersing means rotating at a speed of 3 000 to 10 000 rpm, separating precipitated pigment and drying it, wherein, in order to produce a homogeneous mixture or product of mixed crystals of which 10 to 95 mol% is calcium hydrogen phosphate dihydrate, the balance being magnesium hydrogen phosphate trihydrate, and of which an at least 55 weight% proportion consists of particles with a size of 0 to 5 microns with a BET-surface area of a least 1 m²/g, preferably 2-5 m²/g, finely pulverized calcium and magnesium compounds are stirred jointly with water and optionally a water-soluble alkanol so as to obtain a homogeneous suspension or solution ; this latter is intimately mixed, inside the dispersing means at 0 to 40 °C, with the phosphoric acid or solution of the acid phosphates in an approximately stoichiometric ratio, precipitated pigment is separated and dried under mild conditions while preserving the content of water of crystallization.

2. Process as claimed in claim 1, wherein the calcium and magnesium compounds used are oxides, hydroxides, carbonates, basic carbonates or carboxylates, preferably acetates.

3. Process as claimed in claim 1 or 2, wherein the calcium and magnesium compounds are mixed jointly with water and optionally a water-soluble alkanol with the use of an agitator rotating at a speed of 60 to 800 rpm.

4. Process as claimed in any of the preceding claims, wherein, in the event of the process being effected continuously, the homogeneous suspension or solution of the calcium/magnesium-compounds on the one hand and the phosphoric acid or acid phosphate solution on the other are jointly introduced into the dispersing means.

5. Process as claimed in any of claims 1 to 3, wherein, in the vent of the process being effected discontinuously, the homogeneous suspension or solution of the calcium/magnesium-compounds is circulated through the dispersing means and admixed therein with metered proportions of phosphoric acid or acid phosphate solution.

6. Process as claimed in any of the preceding claims, wherein a 5 to 50 weight% homogeneous suspension of the calcium/magnesium-compounds is reacted, inside the dispersing means, with phosphoric acid with a strength of 10 to 85 weight%, preferably 50 to 85 weight%.

7. Process as claimed in any of the preceding claims, wherein the phosphoric acid or acid phosphate solution is introduced into the dispersing means through a nozzle structure.

8. Process as claimed in any of the preceding claims, wherein the phosphoric acid is used in the form of an aqueous or aqueous/alcoholic solution.

9. Process as claimed in any of the preceding claims, wherein a screw pump or disperser operated by the rotor/stator principle is used as the dispersing means.

**Revendications**

1. Procédé pour la préparation de pigments protecteurs anticorrosion contenant du phosphore, ayant une dimension de particules de 20 μm au plus, par réaction de composés du calcium ou du magnésium avec l'acide phosphorique ou des phosphates acides de métaux alcalins ou d'ammonium en suspension ou solution aqueuse par brassage intime dans un organe de dispersion tournant à 3 000-10 000 tr/min, séparation et séchage du pigment précipité, caractérisé en ce que, pour la préparation d'un mélange homogène ou produit cristallisé mixte de 10-95 moles% d'hydrogénophosphate de calcium dihydraté, le reste d'hydrogénophosphate de magnésium trihydraté, d'une fraction granulométrique d'au moins 55 % en poids dans l'intervalle de 0 à 5 μm et d'une surface spécifique BET d'au moins 1 m²/g, de préférence 2-5 m²/g, on délaie des composés du calcium et du magnésium finement pulvérisés avec l'eau et éventuellement un alcanol soluble dans l'eau en une bouillie homogène ou solution, on mélange intimement celle-ci dans l'organe de dispersion à 0-40 °C avec l'acide phosphorique ou une solution des phosphates acides dans un rapport molaire voisin du rapport stœchiométrique, on sépare le pigment précipité et on le sèche doucement en conservant la teneur en eau de cristallisation.

2. Procédé selon la revendication 1, caractérisé en ce que l'on utilise comme composés du calcium et du magnésium, des oxydes, hydroxydes, carbonates, carbonates basiques ou carboxylates, de préférence des acétates.

3. Procédé selon la revendication 1 ou 2, caractérisé en ce que l'on délaie les composés du calcium et du magnésium avec l'eau et éventuellement un alcanol soluble dans l'eau à l'aide d'un agitateur tournant à 60-800 tr/min.

4. Procédé selon l'une des revendications précédentes, caractérisé en ce que, dans le cas d'un mode opératoire continu, on dose simultanément dans l'organe de dispersion la bouillie homogène ou la solution des composés de calcium/magnésium, d'une part, et l'acide phosphorique ou la solution des phosphates acides, d'autre part.

5. Procédé selon l'une des revendications 1 à 3, caractérisé en ce que dans le cas d'un mode opératoire discontinu, on fait circuler la bouillie homogène ou solution des composés de calcium/magnésium à travers l'organe de dispersion dans lequel on dose l'acide phosphorique ou la solution des phosphates acides.

6. Procédé selon l'une des revendications précédentes, caractérisé en ce que l'on fait réagir une

7

bouillie homogène à 5-50 % en poids des composés de calcium/magnésium avec l'acide phosphorique à 10-85 % en poids, de préférence 50-85 % en poids, dans l'organe de dispersion.

7. Procédé selon l'une des revendications précédentes, caractérisé en ce que l'on introduit l'acide phosphorique ou la solution des phosphates acides dans l'organe de dispersion par une buse.

8. Procédé selon l'une quelconque des revendications précédentes, caractérisé en ce que l'on utilise l'acide phosphorique sous forme d'une solution aqueuse ou hydroalcoolique.

9. Procédé selon l'une quelconque des revendications précédentes, caractérisé en ce que l'on utilise comme organe de dispersion une pompe à vis ou un appareil à disperser selon le principe rotor-stator.